# EUROPEAN PATENT APPLICATION

(11) **EP 4 786 139 A1**
(43) Date of publication of application: **05.08.2026**
(21) Application number: 24871334.9
(22) Date of filing: 15.04.2024
(51) Int. Cl.: B29C 48/59, B29B 7/46, B29B 7/58, B29C 48/40, B29C 48/56

(54) **SCREW FOR TWIN-SHAFT NON-MESHING EXTRUDER AND TWIN-SHAFT NON-MESHING EXTRUDER**

(30) Priority: 26.09.2023 JP 2023163554
(71) Applicant: The Japan Steel Works, Ltd., Tokyo 141-0032 (JP)
(72) Inventor: OHARA, Hiroki, Tokyo 141-0032 (JP); ISHIKAWA, Makoto, Tokyo 141-0032 (JP); USHIO, Takeshi, Tokyo 141-0032 (JP)
(74) Representative: Simmons & Simmons LLP (Munich)
(86) International application number: PCT/JP2024/014918
(87) International publication number: WO 2025/069520

(57) **Abstract**

According to one embodiment, a screw 14 has an upper-stage-side screw portion 31 and a lower-stage-side screw portion 32 having different flight cross-sectional shapes, and a curvature radius of the flight cross-sectional shape of the lower-stage-side screw portion 32 is larger than a curvature radius of the flight cross-sectional shape of the upper-stage-side screw portion 31.

## Description

### TECHNICAL FIELD

This disclosure relates to a non-intermeshing twin-screw extruder.

### BACKGROUND ART

An extruder for extruding molten resin is known. The extruder may constitute a granulator that produces resin pellets. Patent Document 1 describes a granulator including an extruder and a cutter configured to cut molten resin extruded from the extruder.

The extruder includes a cylinder to which a raw material resin is supplied and a screw that is rotationally driven in the cylinder. The raw material resin supplied into the cylinder is melted inside the cylinder and conveyed while being kneaded by the screw.

### RELATED ART DOCUMENTS

### PATENT DOCUMENTS

Patent Document 1: Japanese Unexamined Patent Application Publication No. 2022-071886

### SUMMARY OF THE INVENTION

### PROBLEMS TO BE SOLVED BY THE INVENTION

It is required to prevent retention of molten resin in a cylinder of a non-intermeshing twin-screw extruder.

Other objects and novel features will become apparent from the description of this specification and the accompanying drawings.

### MEANS FOR SOLVING THE PROBLEMS

According to one embodiment, a screw for a non-intermeshing twin-screw extruder includes an upper-side screw portion having a first flight cross-sectional shape and a lower-side screw portion having a second flight cross-sectional shape. Also, a radius of curvature of the second flight cross-sectional shape is larger than a radius of curvature of the first flight cross-sectional shape.

### EFFECTS OF THE INVENTION

According to one embodiment, retention of molten resin in a cylinder of a non-intermeshing twin-screw extruder is suppressed.

### BRIEF DESCRIPTION OF THE DRAWINGS

[FIG. 1] is a schematic diagram illustrating a configuration of a granulator according to an embodiment.
[FIG. 2] is a cross-sectional view illustrating a structure of an extruder according to the embodiment.
[FIG. 3] is another cross-sectional view illustrating the structure of the extruder according to the embodiment.
[FIG. 4] is a perspective view illustrating an external appearance of a screw according to the embodiment.
[FIG. 5] is a perspective view illustrating, in an enlarged manner, a portion of an upper-side flight according to the embodiment.
[FIG. 6] is a perspective view illustrating, in an enlarged manner, a portion of a lower-side flight according to the embodiment.
[FIG. 7A] is a partial cross-sectional view of the upper-side flight taken along a line a-a in FIG. 5.
[FIG. 7B] is a partial cross-sectional view of the lower-side flight taken along a line b-b in FIG. 6.
[FIG. 8] is a table illustrating results of a comparison test.

### DETAILED DESCRIPTION OF PREFERRED EMBODIMENTS

Hereinafter, an embodiment will be described in detail with reference to the drawings. Note that the members and devices having the same or substantially same function are denoted by the same reference numerals in all the drawings for describing the embodiment. Also, the members and devices that have been described once will not be described repeatedly in principle.

### <Granulator>

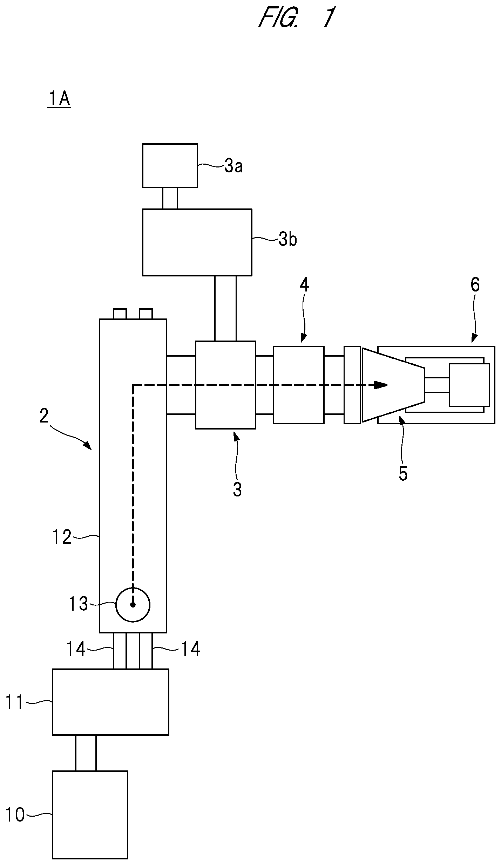

FIG. 1 is a schematic diagram illustrating a configuration of a granulator 1A according to the present embodiment. The granulator 1A includes a non-intermeshing twin-screw extruder 2, a gear pump 3, a foreign matter removal unit (screen changer) 4, a die head 5, and a cutter (pelletizer) 6.

### <Extruder>

The non-intermeshing twin-screw extruder 2 includes a main motor 10, a speed reducer 11, a cylinder (barrel) 12, a hopper 13, and screws 14 for the non-intermeshing twin-screw extruder. In the following description, the non-intermeshing twin-screw extruder 2 may be referred to as an "extruder 2," and the screw 14 for the non-intermeshing twin-screw extruder may be referred to as a "screw 14."

The main motor 10 is an electric motor. Rotational driving force output from the main motor 10 is input to the screws 14 via the speed reducer 11 to rotate the screws 14. The speed reducer 11 reduces a rotational speed of the rotational driving force output from the main motor 10 and increases a torque of the rotational driving force input to the screws 14.

The hopper 13 is disposed on one end of the cylinder 12 in a longitudinal direction. The cylinder 12 forms a conveyance path (flow path) through which a raw material resin supplied via the hopper 13 and molten resin are conveyed.

The raw material resin fed into the hopper 13 passes through the hopper 13 and falls into the cylinder 12. The raw material resin that has fallen into the cylinder 12 is conveyed from one end of the cylinder 12 in the longitudinal direction where the hopper 13 is disposed toward the other end of the cylinder 12 in the longitudinal direction.

That is, the one end of the cylinder 12 in the longitudinal direction where the hopper 13 is disposed is an upstream side of the conveyance path, and the other end of the cylinder 12 in the longitudinal direction is a downstream side of the conveyance path.

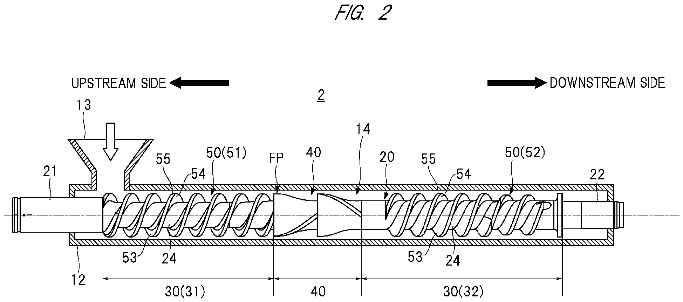

From another perspective, one end of the cylinder 12 in the longitudinal direction where the hopper 13 is disposed is an upstream side of a flow path FP (FIG. 2) through which molten resin flows. On the other hand, the other end of the cylinder 12 in the longitudinal direction where the hopper 13 is not disposed is a downstream side of the flow path FP (FIG. 2) through which molten resin flows.

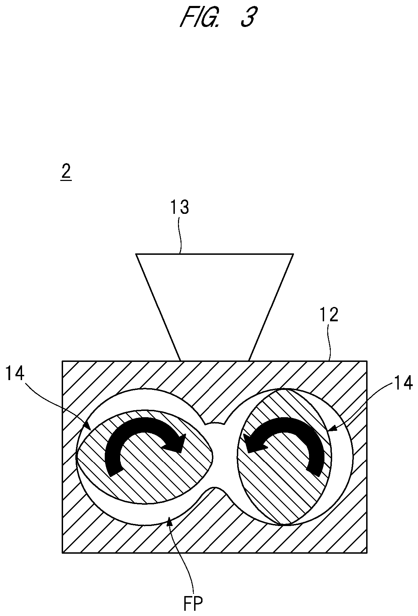

FIG. 2 is a cross-sectional view illustrating a structure of the extruder 2. FIG. 3 is another cross-sectional view illustrating the structure of the extruder 2. The cylinder 12 of the extruder 2 is hollow, and the above-described flow path FP is formed by an internal space of the cylinder 12.

Two screws 14 are disposed in parallel inside the cylinder 12 (the flow path FP). Also, both ends of the respective screws 14 are rotatably supported by bearings.

Understandably, the two screws 14 do not intermesh with each other. Further, the two screws 14 are rotationally driven in different directions inside the cylinder 12 (inside the flow path FP). In other words, the two screws 14 are rotationally driven in mutually opposite directions.

That is, the extruder 2 is a "counter-rotating twin-screw extruder" in which two screws 14 disposed in parallel are driven in opposite directions. More specifically, the extruder 2 is a counter-rotating non-intermeshing twin-screw extruder.

In the extruder 2, which is a counter-rotating non-intermeshing twin-screw extruder, the two screws 14 do not contact each other, and the respective screws 14 do not contact the cylinder 12. Accordingly, the extruder 2 can strongly knead molten resin by rotating the screws 14 at a high speed.

Further, since neither the cylinder 12 nor the screws 14 are worn due to contact, the extruder 2 has high mechanical reliability. Note that the screws 14 of the extruder 2 will be described later in detail.

### <Gear Pump and Foreign Matter Removal Unit>

Referring again to FIG. 1, the gear pump 3 supplies (pressure-feeds) molten resin extruded from the extruder 2 to the die head 5 through the foreign matter removal unit (screen changer) 4. The gear pump 3 is driven by a motor 3a. Rotational driving force output from the motor 3a is input to the gear pump 3 via a speed reducer 3b. The foreign matter removal unit 4 removes unnecessary components, residues, foreign substances, and the like from the molten resin passing therethrough.

### <Die Head>

The die head 5 is made up of a die holder, a die plate, a die plate cover, and the like, and is provided with a plurality of nozzles through which molten resin is extruded. The molten resin that has passed through the foreign matter removal unit 4 and has been supplied to the die head 5 is extruded from the nozzles of the die head 5 and formed into strands.

### <Cutter>

The cutter 6 includes a cutting processing unit configured to receive strand-shaped molten resin extruded from the nozzles of the die head 5. The cutting processing unit is provided on a flow path of water (pellet conveying water) circulating in a manufacturing system including the granulator 1A.

During operation of the manufacturing system, the cutting processing unit of the cutter 6 is filled with the pellet conveying water. That is, the molten resin formed into strands by the die head 5 is extruded into water (into the pellet conveying water).

A cutter head that is rotationally driven is provided in the cutting processing unit of the cutter 6. A plurality of cutter blades is attached to the cutter head.

### <Method of Manufacturing Resin Pellets>

Next, outline of an example of a method of manufacturing resin pellets using the granulator 1A will be described. In the manufacturing method described here, the resin pellets are manufacturing through the following steps.

First, a raw material resin is fed into the hopper 13 of the extruder 2. More specifically, a thermoplastic resin powder is fed into the hopper 13. For example, powder of polyethylene (PE) or polypropylene (PP) is fed into the hopper 13.

In general, polyethylene has higher hardness and viscosity than polypropylene. Therefore, in many cases, polyethylene needs to be kneaded more strongly than polypropylene.

The raw material resin fed into the hopper 13 is supplied to the cylinder 12 through the hopper 13. The raw material resin supplied to the cylinder 12 is conveyed by the rotating screws 14 from the upstream side toward the downstream side of the flow path FP. The raw material resin conveyed in the flow path FP is melted and kneaded during conveyance.

More specifically, the raw material resin is melted by heat generated due to a shearing action caused by rotation of the screws 14. Further, the raw material resin is kneaded by a shearing action and an elongational action caused by rotation of the screws 14 (dispersive mixing and distributive mixing).

As necessary, the raw material resin and the molten resin may be heated by heating means such as a heater, and the raw material resin and the molten resin may be cooled by cooling means.

The kneaded molten resin is supplied to the gear pump 3. The molten resin supplied to the gear pump 3 is supplied (pressure-fed) to the die head 5 through the foreign matter removal unit 4. In the foreign matter removal unit 4, foreign substances mixed from outside and the like are removed.

The molten resin pressure-fed to the die head 5 is continuously extruded from the plurality of nozzles provided in the die head 5. By passing through the nozzles of the die head 5, the molten resin is formed into strands (string-like or ropelike shapes).

The strand-shaped molten resin extruded from the nozzles of the die head 5 is cut into a predetermined length by the cutter head of the cutter 6 and solidifies. That is, the molten resin extruded in the form of strands is divided into pellets. As a result, resin pellets having a predetermined size (length and diameter) are manufactured.

As described above, the cutting processing unit of the cutter 6 is filled with water (pellet conveying water), and the molten resin is cut in water (in the pellet conveying water). A method of cutting molten resin in water in this manner is sometimes referred to as "underwater cutting."

Depending on characteristics of the raw material resin (in particular, a melting point), resin pellets may be manufactured without circulating the pellet conveying water. In this case, the molten resin extruded from the nozzles of the die head 5 is cut in the cutting processing unit in which the pellet conveying water is not present. That is, the molten resin is extruded into air and cut. A method of cutting molten resin in air in this manner is sometimes referred to as "hot cutting."

Description returns again to the method of manufacturing resin pellets in which underwater cutting is performed. The mixture (slurry) of the resin pellets and the pellet conveying water discharged from the cutting processing unit is separated into the resin pellets and the pellet conveying water.

Thereafter, the resin pellets separated from the pellet conveying water are sent to and stored in a pellet silo or the like. For example, the resin pellets are sent to the pellet silo by an airflow generated by a blower.

Note that the resin pellets separated from the pellet conveying water may be dried using a centrifugal dehydrator or the like. Further, the resin pellets may be classified based on size before being stored.

### <Screw>

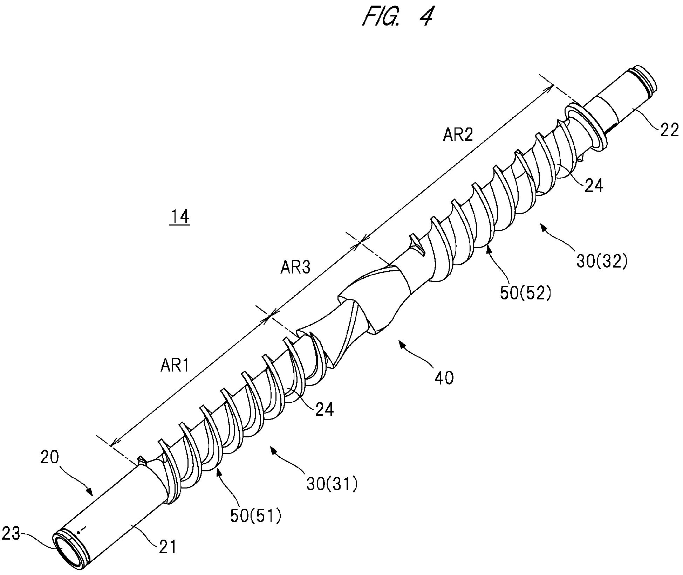

The screws 14 provided in the extruder 2 will be described in more detail. FIG. 4 is a perspective view illustrating an external appearance of the screw 14.

As described above, the two screws 14 are disposed inside the cylinder 12 of the extruder 2, and each screw 14 has the same shape and structure. That is, the description relating to one screw 14 also applies to the other screw 14.

The screw 14 includes a shaft portion 20, a screw portion 30, and a kneading adjustment portion 40. Understandably, the shaft portion 20, the screw portion 30, and the kneading adjustment portion 40 are integrally formed of a metallic material (for example, stainless steel).

### <<Shaft Portion>>

The shaft portion 20 includes a base end portion 21 located on one end in an axial direction and a tip end portion 22 located on the other end in the axial direction, and has a cylindrical or columnar shape as a whole. A coupling hole 23 into which an output shaft of the speed reducer 11 is inserted is provided in the base end portion 21.

The kneading adjustment portion 40 is provided at or near a central portion of the screw 14 in the axial direction. As a result, the shaft portion 20 can be divided into a region located on one side (side of the base end portion 21) of the kneading adjustment portion 40 in the axial direction and a region located on the other side (side of the tip end portion 22) of the kneading adjustment portion 40 in the axial direction.

From another perspective, the screw 14 can be divided into a region AR1 between the kneading adjustment portion 40 and the base end portion 21 of the shaft portion 20, a region AR2 between the kneading adjustment portion 40 and the tip end portion 22 of the shaft portion 20, and a region AR3 between the region AR1 and the region AR2.

As illustrated in FIG. 2, the screw 14 is disposed inside the cylinder 12 such that the base end portion 21 of the shaft portion 20 is located on the upstream side of the flow path FP and the tip end portion 22 of the shaft portion 20 is located on the downstream side of the flow path FP.

As a result, the region AR1, the region AR3, and the region AR2 of the screw 14 are arranged in this order in a line in the cylinder 12 from the upstream side toward the downstream side of the flow path FP. Therefore, in the following description, the region AR1 of the screw 14 may be referred to as an "upstream portion," and the region AR2 may be referred to as a "downstream portion." Further, the region AR3 of the screw 14 may be referred to as a "midstream portion."

Understandably, the above designations and distinctions are merely for convenience of description.

### <<Screw Portion and Flight>>

The screw portion 30 includes an upper-side screw portion 31 provided in the region AR1 (upstream portion) of the screw 14 and a lower-side screw portion 32 provided in the region AR2 (downstream portion) of the screw 14.

In addition, a flight 50 is provided on the screw portion 30. More specifically, an upper-side flight 51 is provided on the upper-side screw portion 31, and a lower-side flight 52 is provided on the lower-side screw portion 32.

The flight 50 protrudes in a flange shape from an outer peripheral surface 24 of the shaft portion 20 toward a radially outer side of the shaft portion 20, and extends helically along the axial direction of the shaft portion 20.

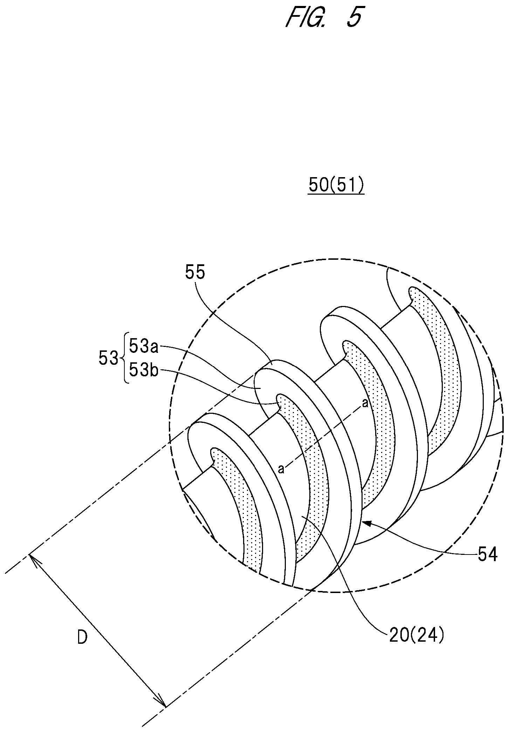

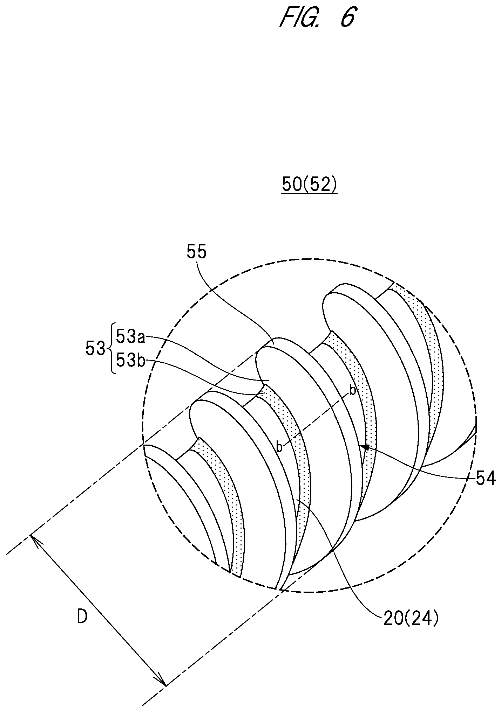

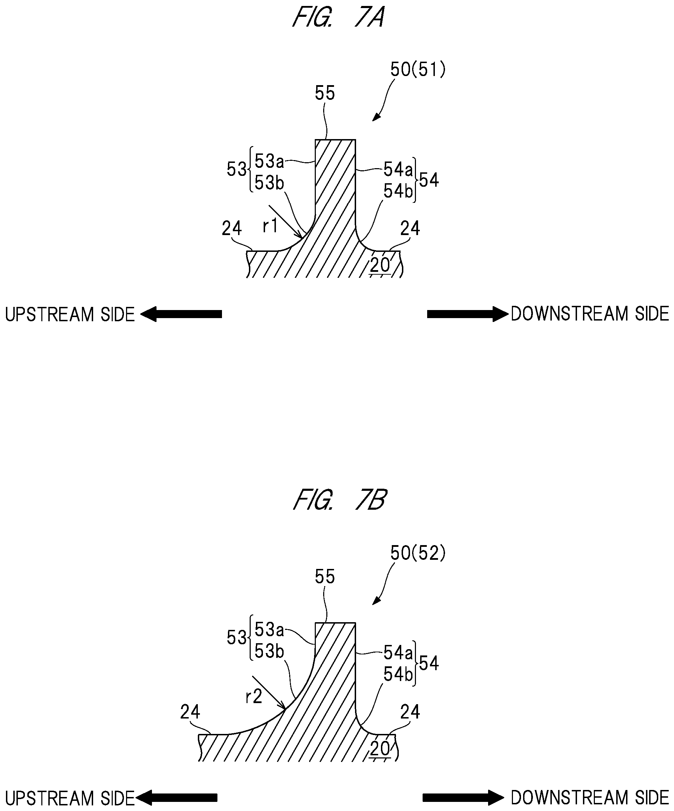

FIG. 5 is a perspective view illustrating, in an enlarged manner, a portion of the upper-side flight 51, and FIG. 6 is a perspective view illustrating, in an enlarged manner, a portion of the lower-side flight 52. FIG. 7A is a cross-sectional view illustrating a cross-sectional shape of the upper-side flight 51 (flight cross-sectional shape), and FIG. 7B is a cross-sectional view illustrating a cross-sectional shape of the lower-side flight 52 (flight cross-sectional shape).

More specifically, FIG. 7A is a partial cross-sectional view of the upper-side flight 51 taken along a line a-a in FIG. 5. FIG. 7B is a partial cross-sectional view of the lower-side flight 52 taken along a line a b-b in FIG. 6.

Note that the line a-a in FIG. 5 and the line b-b in FIG. 6 are straight lines parallel to an axis of the screw 14. That is, the flight cross-sectional shape is a shape of a plane that appears when the flight 50 is cut along a plane parallel to the axis of the screw 14.

A surface of the flight 50 is made up of an upstream side surface 53 facing an upstream side of the flow path FP in the cylinder 12, a downstream side surface 54 facing a downstream side of the flow path FP in the cylinder 12, and an upper surface 55 connecting the upstream side surface 53 and the downstream side surface 54.

The upstream side surface 53 rises from the outer peripheral surface 24 of the shaft portion 20 toward an upstreamside edge of the upper surface 55. On the other hand, the downstream side surface 54 rises from the outer peripheral surface 24 of the shaft portion 20 toward a downstream-side edge of the upper surface 55.

More specifically, the upstream side surface 53 includes a vertical portion 53a that is perpendicular or substantially perpendicular to the outer peripheral surface 24 of the shaft portion 20 and an arc portion 53b interposed between the vertical portion 53a and the outer peripheral surface 24 of the shaft portion 20.

Similarly, the downstream side surface 54 includes a vertical portion 54a that is perpendicular or substantially perpendicular to the outer peripheral surface 24 of the shaft portion 20 and an arc portion 54b interposed between the vertical portion 54a and the outer peripheral surface 24 of the shaft portion 20.

In FIG. 5 and FIG. 6, a dot pattern is applied to the arc portion 53b in order to clearly distinguish the arc portion 53b from other portions.

One side of the arc portion 53b of the upstream side surface 53 is continuous with the outer peripheral surface 24 of the shaft portion 20, and the other side thereof is continuous with the vertical portion 53a. One side of the arc portion 54b of the downstream side surface 54 is continuous with the outer peripheral surface 24 of the shaft portion 20, and the other side thereof is continuous with the vertical portion 54a.

From another perspective, the arc portion 53b is a lower end portion of the flight 50 on the upstream side, and the arc portion 54b is a lower end portion of the flight 50 on the downstream side.

As described above, the upper-side screw portion 31 and the lower-side screw portion 32 have similar flight cross-sectional shapes. However, the flight cross-sectional shapes of the upper-side screw portion 31 and the lower-side screw portion 32 are not identical.

Specifically, a radius of curvature of the arc portion 53b of the upper-side flight 51 provided on the upper-side screw portion 31 and a radius of curvature of the arc portion 53b of the lower-side flight 52 provided on the lower-side screw portion 32 are different from each other. In other words, the upstreamside lower end portions of the upper-side flight 51 and the lower-side flight 52 are both arc-shaped, but their radii of curvature are different from each other.

Specifically, a radius of curvature r2 of the arc portion 53b of the lower-side flight 52 is larger than a radius of curvature r1 of the arc portion 53b of the upper-side flight 51 (r2 > r1). More specifically, in the present embodiment, the radius of curvature r1 is 40.0 mm, and the radius of curvature r2 is 90.0 mm. In other words, in the present embodiment, the radius of curvature r2 is 2.25 times the radius of curvature r1.

By making the radius of curvature r2 of the arc portion 53b of the lower-side flight 52 larger than the radius of curvature r1 of the arc portion 53b of the upper-side flight 51, retention of molten resin in the cylinder 12 is suppressed.

More specifically, the lower-side flight 52 having the arc portion 53b whose radius of curvature is larger than that of the upper-side flight 51 has a smaller contact area with the molten resin than the upper-side flight 51. From another perspective, resistance received when molten resin passes through the lower-side screw portion 32 is smaller than resistance received when molten resin passes through the upper-side screw portion 31.

As a result, on the downstream side of the flow path FP where the lower-side screw portion 32 (lower-side flight 52) is disposed, the molten resin is conveyed more smoothly than on the upstream side of the flow path FP where the upper-side screw portion 31 (upper-side flight 51) is disposed, and retention of molten resin is suppressed.

Furthermore, since retention of molten resin is suppressed on the downstream side of the flow path FP, retention of molten resin is also suppressed on the upstream side of the flow path FP. Overall, retention of molten resin in the flow path FP (inside the cylinder 12) is suppressed, and resin burning or the like is prevented.

Resin burning is a phenomenon in which black spots appear on surfaces of resin molded products such as resin pellets. One cause of resin burning is that molten resin retained in the cylinder 12 is excessively heated and becomes scorched. Therefore, if retention of molten resin in the cylinder 12 is suppressed, resin burning can be prevented.

Note that a radius of curvature of the arc portion 54b of the upper-side flight 51 and a radius of curvature of the arc portion 54b of the lower-side flight 52 are identical. Further, the upper-side flight 51 and the lower-side flight 52 have the same outer diameter D.

More specifically, the outer diameter D of the upper-side flight 51 and the lower-side flight 52 is 450 mm. That is, the radius of curvature r2 of the arc portion 53b of the lower-side flight 52 corresponds to 0.2 times the outer diameter D of the flight 50.

Understandably, the outer diameter D of the flight 50 is not limited to 450 mm. Further, the magnitude of the radius of curvature r2 of the arc portion 53b relative to the outer diameter D of the flight 50 is not limited to 0.2 times. On the other hand, in view of various performances required for the screw 14 (such as kneading performance and conveying performance), it is preferable that the radius of curvature r2 of the arc portion 53b is 0.2 times or more and 0.3 times or less the outer diameter D of the flight 50.

In the extruder 2 according to the present embodiment, in which retention of molten resin is suppressed, a change of the type of the raw material resin can also be completed quickly. More specifically, when changing the type of the raw material resin in the extruder 2 according to the present embodiment, the raw material resin of the previous type can be reliably discharged from the cylinder 12 in a short time. In other words, the new type can be completely replaced with the old type in a short time.

### <<Kneading Adjustment Portion>>

The kneading adjustment portion 40 provided in the region AR3 (midstream portion) of the screw 14 adjusts the pressure acting on the molten resin. A degree of kneading (kneading degree) of the molten resin is controlled by the pressure adjustment by the kneading adjustment portion 40.

From another perspective, the kneading adjustment portion 40 has a role of adjusting a cross-sectional area of the midstream portion of the flow path FP such that the molten resin passing through the flow path FP receives a desired pressure. Note that, as the cross-sectional area of the midstream portion becomes smaller, the pressure applied to the molten resin becomes higher. Also, a portion of the flow path FP in which the kneading adjustment portion 40 is disposed is sometimes referred to as a "gate portion."

### <Comparison Test>

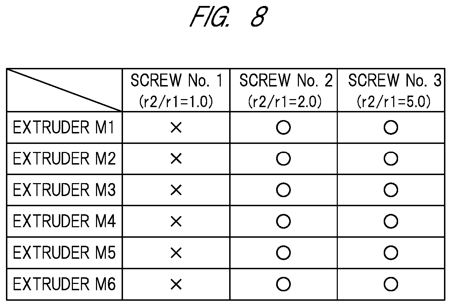

FIG. 8 is a table illustrating results of a comparison test conducted by the inventors of this application. In this test, six extruders M1 to M6 having substantially the same configuration as the extruder 2 were prepared. However, the outer diameters of the screws 14 mounted in the respective extruders M1 to M6 were different from one another. Accordingly, each of the extruders M1 to M6 included a respective cylinder 12 having an inner diameter corresponding to a respective outer diameter of the screw 14 mounted therein.

Furthermore, for each of the extruders M1 to M6, three types of screws were prepared, each having a different ratio (r2/r1) of the radius of curvature r2 of the arc portion 53b of the lower-side flight 52 to the radius of curvature r1 of the arc portion 53b of the upper-side flight 51.

In other words, for each extruder, three types of screws 14 (screw No. 1, screw No. 2, and screw No. 3) each having the same outer diameter and a different ratio (r2/r1) of the radius of curvature r2 to the radius of curvature r1 were prepared.

The ratio (r2/r1) of the screw No. 1 was 1.0, the ratio (r2/r1) of the screw No. 2 was 2.0, and the ratio (r2/r1) of the screw No. 3 was 5.0.

In other words, the radius of curvature r2 of the arc portion 53b of the lower-side flight 52 of screw No. 1 was 1.0 times the radius of curvature r1 of the arc portion 53b of the upper-side flight 51. The radius of curvature r2 of the arc portion 53b of the lower-side flight 52 of screw No. 2 was 2.0 times the radius of curvature r1 of the arc portion 53b of the upper-side flight 51. The radius of curvature r2 of the arc portion 53b of the lower-side flight 52 of screw No. 3 was 5.0 times the radius of curvature r1 of the arc portion 53b of the upper-side flight 51.

Next, the screw No. 1, the screw No. 2, and the screw No. 3 were sequentially mounted in the extruders M1 to M6, and molten resin was extruded under the same conditions. Thereafter, the extruded molten resin was evaluated for the presence or absence of resin burning and the like.

More specifically, for eighteen combinations of the six extruders and the three types of screws, the presence or absence of resin burning and the possibility of resin burning were visually confirmed. Furthermore, combinations for which resin burning was not confirmed were evaluated as "O," and combinations for which resin burning was confirmed or the possibility of resin burning was confirmed were evaluated as "X." The table of FIG. 8 illustrates results of such evaluation.

In this test, resin burning was not confirmed in all of the combinations in which the ratio (r2/r1) of the radius of curvature r2 to the radius of curvature r1 was 2.0 or 5.0. On the other hand, resin burning or the possibility of resin burning was confirmed in all of the combinations in which the ratio (r2/r1) of the radius of curvature r2 to the radius of curvature r1 was 1.0.

From this test, it was confirmed that, when the radius of curvature r2 of the arc portion 53b of the lower-side flight 52 was 2.0 times or more and 5.0 times or less the radius of curvature r1 of the arc portion 53b of the upper-side flight 51, retention of molten resin was suppressed and resin burning could be prevented.

In the foregoing, the invention made by the inventors of this application has been specifically described based on the embodiment and example, but it is needless to say that the present invention is not limited to the embodiment or example described above and can be modified in various ways with the range not departing from the gist thereof.

For example, FIG. 1 merely illustrates an example of a usage mode of the extruder 2. That is, the extruder 2 can constitute an apparatus or a system different from the granulator 1A.

The extruder 2 can also be used for the processing of a raw material resin other than polyethylene. For example, the extruder 2 can be used for the processing of polypropylene (such as melting or kneading). From another viewpoint, even when the extruder 2 is used to process a raw material resin other than polyethylene, retention of molten resin in the cylinder 12 can be suppressed.

Understandably, in many cases, polyethylene has higher hardness and viscosity than polypropylene and therefore needs to be kneaded more strongly. Accordingly, the extruder 2 which is a non-intermeshing twin-screw extruder is more suitable for the processing of polyethylene, if only polyethylene and polypropylene are compared.

In another embodiment, the screw portion 30 including the flight 50 is formed of a plurality of segments (elements) attached to the shaft portion 20.

### REFERENCE SIGNS LIST

1A ... granulator, 2 ... non-intermeshing twin-screw extruder (extruder), 3 ... gear pump, 3a ... motor, 3b ... speed reducer, 4 ... foreign matter removal unit (screen changer), 5 ... die head, 6 ... cutter (pelletizer), 10 ... main motor, 11 ... speed reducer, 12 ... cylinder (barrel), 13 ... hopper, 14 ... screw for non-intermeshing twin-screw extruder (screw), 20 ... shaft portion, 21 ... base end portion, 22 ... tip end portion, 23 ... coupling hole, 24 ... outer peripheral surface, 30 ... screw portion, 31 ... upper-side screw portion, 32 ... lower-side screw portion, 40 ... kneading adjustment portion, 50 ... flight, 51 ... upper-side flight, 52 ... lower-side flight, 53 ... upstream side surface, 53a ... vertical portion, 53b ... arc portion, 54 ... downstream side surface, 54a ... vertical portion, 54b ... arc portion, 55 ... upper surface, AR1, AR2, AR3 ... region, D ... outer diameter, FP ... flow path, r1, r2 ... radius of curvature

## Claims

1. A screw for a non-intermeshing twin-screw extruder, the screw comprising:
an upper-side screw portion having a first flight cross-sectional shape; and
a lower-side screw portion having a second flight cross-sectional shape,
wherein a radius of curvature of the second flight cross-sectional shape is larger than a radius of curvature of the first flight cross-sectional shape.

2. The screw for the non-intermeshing twin-screw extruder according to claim 1,
wherein a flight protruding from an outer peripheral surface of a shaft portion toward a radially outer side of the shaft portion and extending helically along an axial direction of the shaft portion is provided on each of the upper-side screw portion and the lower-side screw portion,
wherein the flight provided on each screw portion has an upstream side surface and a downstream side surface that rise from the outer peripheral surface of the shaft portion,
wherein the upstream side surface and the downstream side surface each include an arc portion continuous with the outer peripheral surface of the shaft portion, and
wherein a radius of curvature of the arc portion of the flight provided on the lower-side screw portion is larger than a radius of curvature of the arc portion of the flight provided on the upper-side screw portion.

3. The screw for the non-intermeshing twin-screw extruder according to claim 1, the screw further comprising a kneading adjustment portion,
wherein the upper-side screw portion is provided on one side of the kneading adjustment portion in an axial direction, and the lower-side screw portion is provided on the other side of the kneading adjustment portion in the axial direction.

4. The screw for the non-intermeshing twin-screw extruder according to claim 1,
wherein the radius of curvature of the second flight cross-sectional shape is 2.0 times or more and 5.0 times or less the radius of curvature of the first flight cross-sectional shape.

5. The screw for the non-intermeshing twin-screw extruder according to claim 1,
wherein the radius of curvature of the second flight cross-sectional shape is 0.2 times or more and 0.3 times or less an outer diameter of a flight.

6. A non-intermeshing twin-screw extruder comprising:
a cylinder; and
a screw disposed inside the cylinder,
wherein the screw includes:
an upper-side screw portion having a first flight cross-sectional shape; and
a lower-side screw portion having a second flight cross-sectional shape, and
wherein a radius of curvature of the second flight cross-sectional shape is larger than a radius of curvature of the first flight cross-sectional shape.

7. The non-intermeshing twin-screw extruder according to claim 6,
wherein the radius of curvature of the second flight cross-sectional shape is 2.0 times or more and 5.0 times or less the radius of curvature of the first flight cross-sectional shape.

8. The non-intermeshing twin-screw extruder according to claim 6,
wherein the screw conveys polyethylene supplied into the cylinder while kneading it.
